(19) Europäisches Patentamt
European Patent Office
Office européen des brevets

(11) **EP 4 012 187 B1**

(12) **EUROPEAN PATENT SPECIFICATION**

(45) Date of publication and mention
of the grant of the patent:
**12.11.2025  Bulletin 2025/46**

(51) International Patent Classification (IPC):
**F04D 17/06** *(2006.01)*     **F04D 25/06** *(2006.01)*
**F04D 25/08** *(2006.01)*     **F04D 29/44** *(2006.01)*
**F04D 29/58** *(2006.01)*

(21) Application number: **21178666.0**

(22) Date of filing: **10.06.2021**

(52) Cooperative Patent Classification (CPC):
**F04D 25/0606; F04D 17/06; F04D 25/082;
F04D 29/444; F04D 29/5806**

(54) **FAN MOTOR**

MOTORGETRIEBENER VENTILATOR

MOTEUR DE VENTILATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.12.2020  KR 20200173586**

(43) Date of publication of application:
**15.06.2022  Bulletin 2022/24**

(73) Proprietor: **LG Electronics Inc.**
**Seoul 07336 (KR)**

(72) Inventors:
• **CHOI, Joongkeun**
**08592 Seoul (KR)**
• **LEE, Jeongho**
**08592 Seoul (KR)**
• **JUNG, Taeyong**
**08592 Seoul (KR)**
• **CHO, Seongho**
**08592 Seoul (KR)**

(74) Representative: **Vossius & Partner**
**Patentanwälte Rechtsanwälte mbB**
**Siebertstraße 3**
**81675 München (DE)**

(56) References cited:
**WO-A1-2019/220071     JP-A- 2020 143 589
KR-B1- 102 171 454     US-A1- 2020 059 133**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present disclosure relates to a small fan motor capable of rotating a fan at a high speed.

As is well known, a motor or electric motor is an apparatus that generates a rotational force using electric energy.

In general, electric motors may include a housing, a stator disposed inside the housing, a rotor that is disposed inside the stator and is configured to be rotated by interaction with a magnetic field produced by the stator, and a rotating shaft that is coupled to the rotor and is configured to rotate together with the rotor.

A fan, such as an impeller, may be coupled to one side of the rotating shaft of the electric motor to generate an air current.

In some cases, the electric motor can be used in a home appliance such as a vacuum cleaner and a hair dryer. The electric motor may be coupled to a fan that generates an air current when being rotated by receiving power from the electric motor.

Since the vacuum cleaner or the hair dryer is held and used in one or both hands, its size and weight reduction may be related to portability and convenience of use.

As the vacuum cleaner or the hair dryer is configured to be small in size and/or lightweight, a relatively fast "high-speed rotation" is required to generate the required air volume. In addition, the cooling performance and the reliability of bearing should be achieved when the electric motor is rotated at a high speed.

Japanese Registered Patent Publication No. JP 5806758 (hereinafter, Patent Document 1), discloses a structure in which a flow path or passage is formed by using a fan motor housing and a mount, and air that has passed through a centrifugal diffuser cools the inside of a motor through an opening (or gap) in a lower end of the diffuser and is then discharged to the outside of the motor through an outlet.

However, in JP5806758 B2, a flow path of air introduced into the motor through an impeller inlet is in parallel with a rotating shaft, and the air is discharged through an impeller outlet where an angle of the flow path is bent. Then, the angle of the flow path is rapidly changed again after passing through a vane.

That is, a flow loss of air is excessively increased as the flow path of air is rapidly changed several times.

In addition, since air introduced from the outside as the impeller rotates flows into the housing before passing through the motor, cooling of the motor when being rotated at a high speed may be difficult.

Thus, a fan motor that can reduce a flow loss caused when an air flow path is significantly bent or changed, achieve the size and weight reduction, and effectively cool a motor during high-speed rotation while achieving a structural stability.

US 2020/0059133 A discloses an electric motor for vehicle having a fan. WO 2019/220071 A1 discloses a compressor having an impeller.

One aspect of the present disclosure is directed to minimizing a change of an air flow path inside a housing and reducing an entire length of the air flow path to minimize an air flow loss.

Still another aspect of the present disclosure is to provide a fan motor that can prevent interference in the flow of air by reducing a radial length of a vane, and to achieve the size and weight reduction.

Still another aspect of the present disclosure is to provide a fan motor that can allow air introduced from the outside as a motor is rotated at a high speed to come in contact with the motor by changing a flow path of the air, thereby cooling the motor in a more efficient manner.

Still another aspect of the present disclosure is to provide a fan motor that can achieve reliability by securely supporting bearings that are respectively installed at both ends of a rotor assembly by a housing cover.

In order to achieve these and other advantages and in accordance with the purpose of this specification, implementations disclosed herein provide a fan motor comprising the features of claim 1.

In some implementations, the second housing cover may include an outer cover, a first inner hub disposed inside the outer cover, a second bearing accommodating portion that protrudes from one side of the first inner hub toward the impeller and accommodates the second bearing therein, and a plurality of housing cover blades protruding in a helical manner from an outer circumferential surface of the first inner hub toward an inner circumferential surface of the outer cover, so as to connect the outer cover and the first inner hub.

In some implementations, the plurality of housing cover blades may be radially disposed to be inclined toward an inner surface of the housing at a predetermined angle, so as to respectively guide a flow of air moved by the impeller.

In some implementations, the vane may include a second inner hub accommodated in the outer cover and disposed in series with the first inner hub, and a plurality of vane blades protruding in a helical manner from an outer circumferential surface of the second inner hub toward the inner circumferential surface of the outer cover.

In some implementations, the first housing cover may be coupled to an upstream end of the housing with respect to a flow direction of air.

In some implementations, the first housing cover may be disposed at an upstream side of the impeller with respect the flow direction (moving direction) of the air.

In some implementations, a first bearing accommodating portion may have a recessed central portion in which the first bearing is accommodated.

In some implementations, the first housing cover may include an outer ring portion provided at an edge thereof to have a cylindrical shape with a constant height, and a connecting portion extending to connect the first bearing accommodating portion and the outer ring portion.

In some implementations, the first housing cover may be provided with a plurality of axial through-holes so as to allow air to be sucked at a position adjacent to the first bearing accommodating portion.

In some implementations, each of the plurality of axial through-holes may be formed through the connecting portion and be provided between the outer ring portion and the connecting portion.

In some implementations, the vane may include a vane hub having a cylindrical shape, and a plurality of vane blades formed along an outer surface of the vane hub. The plurality of vane blades may be disposed at respective positions corresponding to positions of a plurality of housing cover blades provided at the second housing cover.

In some implementations, the impeller may include a hub having a cylindrical shape, and a plurality of impeller blades protruding along an outer circumferential surface of the hub.

In some implementations, the first bearing and the second bearing may be each configured as a ball bearing.

In some implementations, O-rings may be provided on outer surfaces of the first bearing and the second bearing, respectively.

In some implementations, the impeller, the rotor assembly, and the stator assembly may be located between the first bearing and the second bearing along the axial direction.

In some implementations, air that has passed through the first housing cover may be discharged to the outside by sequentially passing through the first bearing, the rotor assembly and the stator assembly, the impeller, and the second housing cover.

According to the invention, the housing includes a first accommodating portion in which the rotor assembly and the stator assembly are accommodated, a second accommodating portion formed at a lower portion of the first accommodating portion and in which the impeller is accommodated, a neck portion provided between the first accommodating portion and the second accommodating portion to have a diameter smaller than a diameter of the first accommodating portion, and an inclined portion inclined from the first accommodating portion toward the neck portion.

According to the invention, the inclined portion has a tapered shape with a diameter that gradually decreases from the first accommodating portion toward the neck portion.

In some implementations, an inclination of the inclined portion may be determined by a half value (D3) of the difference between an inner diameter (D1) of the first accommodating portion and an inner diameter (D2) of the neck portion, and a height difference (H) between front and rear ends of the inclined portion.

In some implementations, an angle $\theta$ of the inclined portion may be determined by [Equation 1] below.

[Equation 1]

$$\text{Angle of the inclined portion } (\theta) = \tan^{-1}\left(\frac{H}{D3}\right), \quad D3 = \left(\frac{(D1 - D2)}{2}\right),$$

where D1 denotes an inner diameter of the first accommodating portion, D2 denotes an inner diameter of the neck portion, and H is a height difference between the front and rear ends of the inclined portion.

In some implementations, a first flange that protrudes radially outward may be provided at a lower end of the housing, a second flange that protrudes radially outward may be provided at the second housing cover, and the first flange and the second flange may be disposed to overlap each other so as to be in close contact with each other.

The fan motor described above may have a structure in which an axial flow vane is installed in a rear position of a diagonal flow impeller. As the axial flow vane is employed in the fan motor, an air flow path may not be greatly or significantly changed compared to when a diagonal flow vane is applied. In addition, a total length of the air flow path may be reduced, allowing a flow loss to be minimized. A neck portion may be formed at a housing to reduce a cross-sectional area of the air flow. This may allow the flow velocity of air to be increased to thereby increase a suction speed. This may also result in facilitating the flow of air to thereby further reduce the flow loss.

As the fan motor includes a second housing cover that serves as an axial flow vane, a radial length may be reduced compared to when a diagonal flow vane is applied. This may allow the size and weight of the fan motor to be reduced, and prevent air interference while flowing.

As the second housing cover is disposed in parallel along the axial direction, a mold may be more easily removed in an up-and-down direction. This may lead to a simpler manufacturing process of the second housing cover, allowing economic feasibility of mass production to be achieved.

Even when the fan motor rotates at a high speed of 100,000 rpm or higher, air introduced as the impeller rotates may first come into contact with a stator assembly and a rotor assembly to be cooled, thereby achieving more efficient cooling performance.

Since first and second bearings installed at both ends of a rotating shaft are supported by a first housing cover and the second housing cover, respectively, a lifespan of the bearings may be increased due to this stable support structure during high-speed rotation of the motor even when the first bearing and the second bearing that respectively support the both ends of the rotating shaft are located far from each other according to the motor design.

BRIEF DESCRIPTION OF THE DRAWINGS

FIG. 1 is a longitudinal cross-sectional view of a fan motor according to an implementation of the present disclosure;

FIG. 2 is an exploded perspective view of a fan motor;

FIG. 3 is a perspective view of a second housing cover;

FIG. 4 is a cross-sectional view of the second housing cover of FIG. 3;

FIG. 5 is a schematic view illustrating a flow of air when an impeller and a second housing cover are installed inside a housing;

FIG. 6 is an enlarged view of an area "A" of FIG. 5;

FIG. 7 is a cut-away view illustrating an inside of a housing; and

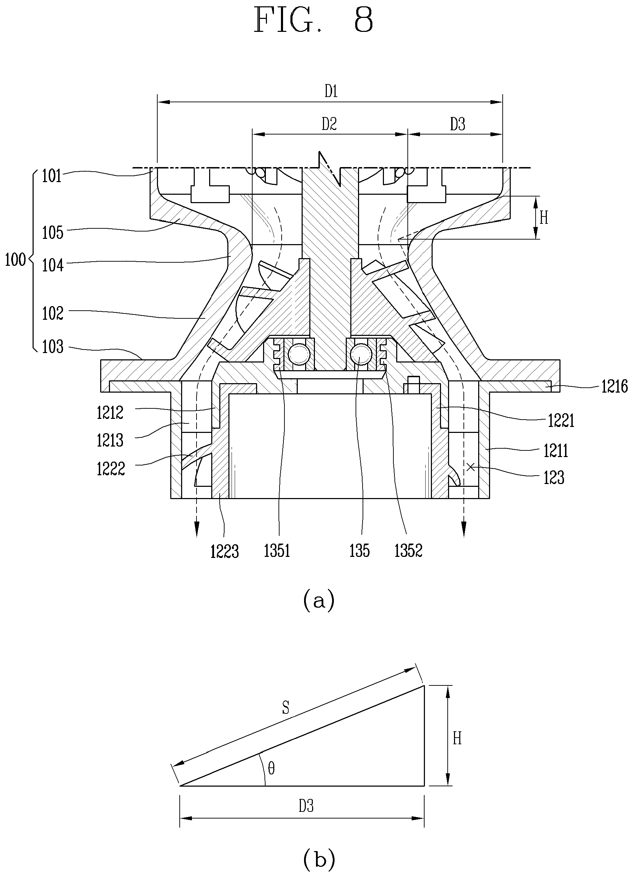

(a) of FIG. 8 is a cross-sectional view illustrating an inside of a housing, and (b) of FIG. 8 is a schematic view illustrating an inclination ($\theta$) of an inclined portion of the housing represented by a triangle, which is determined by a half value of the difference between an inner diameter (D1) of a first accommodating portion and an inner diameter (D2) of a neck portion, and a height difference (H) between front and rear ends of the inclined portion.

Hereinafter, a fan motor according to one or more implementations of the present disclosure will be described in detail with reference to the accompanying drawings.

Herein, the same or similar elements are designated with the same or similar reference numerals, and a redundant description has been omitted.

In addition, even if different implementations do not contradict structurally and functionally, the structure applied to one implementation may be equally applied to another implementation.

Singular expressions include plural expressions unless the context clearly indicates otherwise.

In describing the present disclosure, if a detailed explanation for a related known technology or construction is considered to unnecessarily divert the main point, such explanation has been omitted but would be understood by those skilled in the art.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

The term "motor" used herein refers to a device that converts energy, such as electricity, into mechanical energy, namely, an electric motor, etc., and the term "fan motor" refers to a motor that generates an air current by rotating a fan.

In addition, the "motor" may provide power for sucking air into a vacuum cleaner or power for transferring air to a specific location in a hair dryer, etc.

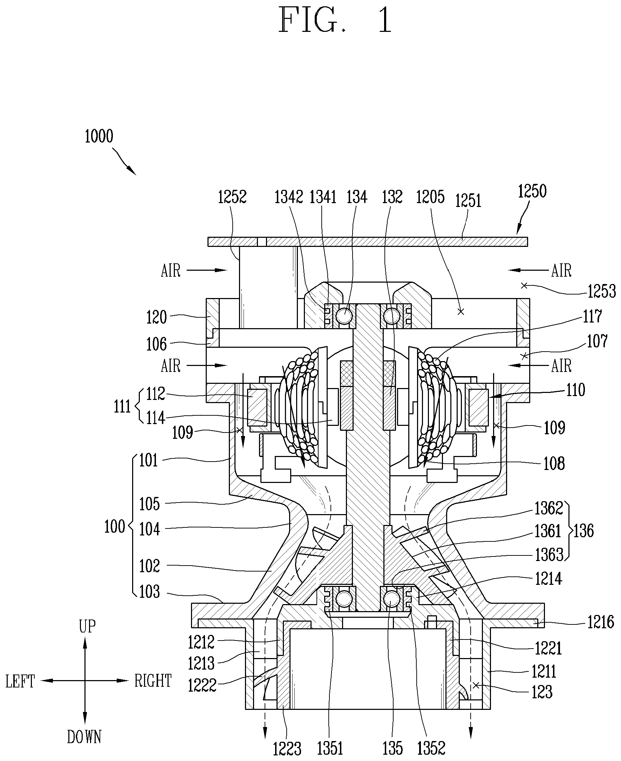

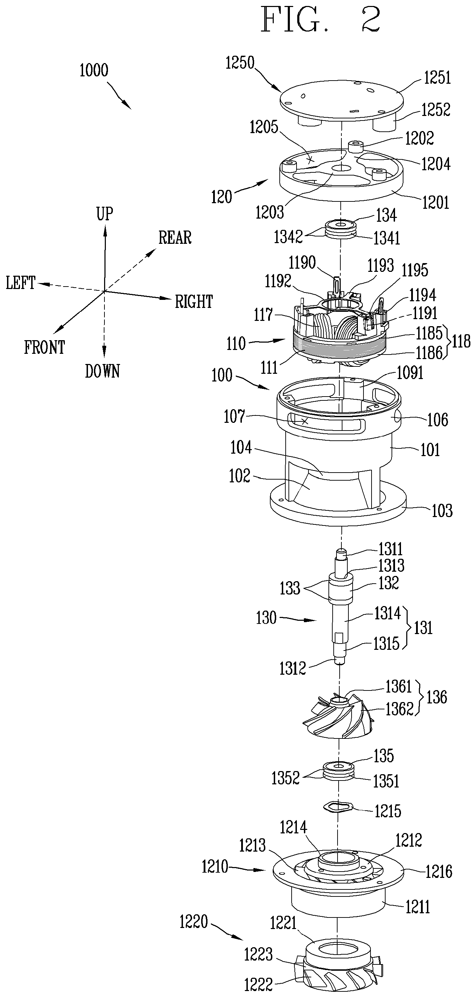

The term "upper" (up: see FIGS. 1 and 2) used herein refers to an upper part or side in an up-and-down direction of the drawings, and the term "lower" (down: see FIGS. 1 and 2) refers to a lower part or side in the up-and-down direction. The up-and-down direction may refer to a direction parallel or equal to an axial direction of a rotating shaft.

In addition, a radial direction used herein may include a front-and-rear direction (front/rear: see FIG. 2) and a left-and-right direction (left/right: see FIGS. 1 and 2).

FIG. 1 is a longitudinal cross-sectional view of a fan motor 1000 according to an implementation of the present disclosure, and FIG. 2 is an exploded perspective view of the fan motor 1000.

The fan motor 1000 according to the present disclosure includes a housing 100, a stator assembly 110, a rotor assembly 130, an impeller 136, a vane 1220, and first and second bearings 134 and 135, and first and second housing covers 120 and 1210.

The housing 100 that defines an outer appearance of the fan motor 1000 may have a circular cross section.

The housing 100 may be provided therein with an accommodation space and serve to produce a flow of air along a lengthwise direction (up-and-down direction in the drawing or axial direction).

Air sucked into the housing 100 from an upper part of the housing 100 passes through a neck portion having a decreasing cross-sectional area. As the flow velocity of air increases from the neck portion, an air intake or suction speed may be increased. The neck portion is formed between a first accommodating portion 101 and a second accommodating portion 102 of the housing 100. The neck portion may also be referred to as a bottleneck portion. A detailed description thereof will be described hereinafter.

The housing 100 may include the first accommodating portion 101, the second accommodating portion 102, and a neck portion 104.

The first accommodating portion 101 may have a cylindrical shape and be disposed at an upper portion of the housing 100. A center of the first accommodating portion 101 that defines a center of the housing 100 may be located to correspond to a center of a rotating (or rotational) shaft 131.

The first accommodating portion 101 is provided therein with an accommodation space in which the rotor assembly 130 and the stator assembly 110 are accommodated.

A diameter of the first accommodating portion 101 may be constant in the up-and down direction. The first accommodating portion 101 may have a constant cross-sectional area in a radial direction.

An intake port (or inlet) 106 is formed at an upper portion of the first accommodating portion 101. The intake port 106 may be integrally formed on the upper portion of the first accommodating portion 101 and is configured to suck air into the housing 110. The intake port 106 may communicate with an outside of the housing 100.

The intake port 106 may have a circular ring shape. A diameter of the intake port 106 may be greater than the diameter of the first accommodating portion 101. An upper portion of the intake port 106 may radially extend outward from an upper end of the first accommodating portion 101 in a stepped manner to thereby have a larger diameter.

A plurality of side holes 107 may be formed at the intake port 106, and the plurality of side holes 107 may be formed through a circumferential surface of the intake port 106 in the radial direction. The plurality of side holes 107 may be spaced apart from one another in a circumferential direction of the intake port 106.

The plurality of side holes 107 may extend along the circumferential direction of the intake port 106. The side hole 107 may be longer in the circumferential direction than in the up-and-down direction.

The plurality of side holes 107 may be spaced apart from each other at equal intervals in the circumferential direction of the intake port 106. Here, the interval between the side holes 107 may be less than a length of the side hole 107.

The side hole 107 may have a rectangular shape in the radial direction when viewed from an outer surface of the housing 100. Each vertex (or corner) of the side hole 107 may be curved to have rounded corners.

The intake port 106 may penetrate in the up-and-down direction. Air outside the housing 100 may be introduced through the intake port 106 and flow in the radial direction through the plurality of side holes 107, allowing the air to be introduced into the housing 100. In addition, air may be axially introduced into the housing 100 from an upper part of the intake port 106.

The neck portion 104 formed at the housing 100 is disposed between the first accommodating portion 101 and the second accommodating portion 102. A diameter of the neck portion 104 may be less than the diameter of the first accommodating portion 101. Accordingly, the flow velocity of air flowing from the first accommodating portion 101 to the second accommodating portion 102 may be increased while passing through the neck portion 104.

An inclined portion 105 is provided between a lower end of the first accommodating portion 101 and the neck portion 104. The inclined portion 105 has a diameter that gradually decreases from the first accommodating portion 101 toward the neck portion 104.

The second accommodating portion 102 may have a conical shape. The second accommodating portion 102 may have a shape with a decreasing diameter from the top to the bottom. For example, an upper end of the second accommodating portion 102 may be smaller in diameter than a lower end of the second accommodating portion 102.

A first flange 103 may be formed at the lower end of the second accommodating portion 102. The first flange 103 may have a ring shape and extend radially outward from the lower end of the second accommodating portion 102. For example, the first flange 103 may protrude radially outward from the lower end of the second accommodating portion 102.

The impeller 136 is accommodated in the second accommodating portion 102. The impeller 136 serves to form a flow of air through a rotational force generated by the rotor assembly 110 and the stator assembly 130.

The impeller 136 may be mounted to one side of the rotating shaft 131, so as to rotate together with the rotating shaft 131.

The impeller 136 that serves to produce a flow of air by receiving power from the motor through the rotating shaft 131 may suck air introduced into the first accommodating portion 101 into the second accommodating portion 102.

The impeller 136 may include an impeller hub 1361 and a plurality of blades 1362. As illustrated in FIG. 2, the impeller 136 may be configured as a diagonal flow type. In the diagonal flow impeller, air is sucked along the axial direction and is discharged in an inclined manner with respect to the axial direction.

The impeller 136 configured as the diagonal flow type has a conical shape, that is, the impeller hub 1361 of the impeller 136 may have a conical shape with a decreasing diameter from the top toward the bottom.

The impeller 136 configured as the diagonal flow type has a fluid flow direction that corresponds between a fluid flow direction of a centrifugal impeller and a fluid flow direction of an axial flow impeller, and the plurality of blades 1362 has an inclination (or slope) of an approximately 45 degrees with respect to a rotation direction of the impeller 136 and the axial direction. The fluid flow direction is formed along an outer surface of the impeller hub 1361. As for the axial flow impeller, air is sucked along the axial direction and is discharged along the axial direction.

The impeller hub 1361 may have a diameter that gradually increases from the top to the bottom, and the outer surface of the impeller hub 1361 may be inclined at a predetermined angle.

The impeller hub 1361 may be provided therein with a shaft coupling portion (not shown) that has a cylindrical shape and is formed therethrough in the axial direction.

One side of the rotating shaft 131 is inserted into the shaft coupling portion (not shown), allowing the impeller 136 to rotate together with the rotating shaft 131.

The plurality of blades 1362 may each protrude from the outer surface of the impeller hub 1361 toward an inner surface of the second accommodating portion 102. The plurality of blades 1362 may each extend from the outer surface of the impeller hub 1361 in a helical direction at a predetermined wrap angle. Here, the wrap angle refers to an angle formed by a length of the blade 1362 extending from the outer surface of the impeller hub 1361 in the circumferential direction. The smaller the wrap angle of the blade 1362, the less the air flow resistance of the impeller 136.

The wrap angle of the blade 1362 may be 90 degrees or less to reduce the air flow resistance. In this case, the impeller 136 may be rotated relative to the second accommodating portion 102 by a rotational force of the motor, allowing air between the blades 1362 to be rotated. The rotating air may move from the upper end to the lower end of the second accommodating portion 102 along a flow path or passage between the outer surface of the impeller hub 1361 and the inner surface of the second accommodating portion 102.

In this implementation, the fan motor 1000 includes the first housing cover 120 mounted on one side of the housing 100 and in which the first bearing 134 is provided, and the second housing cover 1210 mounted on another side of the housing 100 and in which the second bearing 135 is provided.

The first housing cover 120 and the second housing cover 1210 may be installed at the upper and lower portions of the housing 100, respectively.

The first housing cover 120 may have a circular ring shape and be mounted to the upper portion of the housing 100, namely, to the upper portion of the intake port 106 of the housing 100.

The first housing cover 120 may include an outer ring portion (or outer ring) 1201, a first bearing accommodating portion 1203, and a plurality of connecting portions 1204.

The outer ring portion 1201 may define an outer edge surface of the first housing cover 120.

The first bearing accommodating portion 1203 may be formed at a central portion or part of the outer ring portion 1201 and have a cylindrical shape. The first bearing accommodating portion 1203 has an accommodation space in which the first bearing 134 is accommodated.

The first bearing accommodating portion 1203 may have the same height (thickness) as the outer ring portion 1201. An axial through-hole 1205 may be formed at an upper portion of the first bearing accommodating portion 1203. The first bearing accommodating portion 1203 surrounds and supports an outer circumferential surface of the first bearing 134.

In this implementation, the first bearing 134 may be configured as a ball bearing, and a first holder 1341 may be installed on the outer circumferential surface of the first bearing 134. The first holder 1341 may have a cylindrical shape.

A first O-ring 1342 may be installed on an outer circumferential surface of the first holder 1341. The first O-ring 1342 may be provided in plurality.

The plurality of first O-rings 1342 may be spaced apart from each other in a lengthwise direction of the first holder 1341. A first O-ring mounting groove (not shown) may be formed on the outer circumferential surface of the first holder 1341 so as to allow the first O-ring 1342 to be inserted and fixed therein.

The first O-ring 1342 may be disposed between an inner circumferential surface of the first bearing accommodating portion 1203 and the outer circumferential surface of the first holder 1341 in a close contact manner.

The first O-ring 1342 may have a circular cross-sectional shape, and at least a portion or part of the circular cross-section of the first O-ring 1342 may protrude from the first O-ring mounting groove (not shown), so as to be in close contact with the inner circumferential surface of the first bearing accommodating portion 1203.

The first O-ring 1342 may be made of an elastic material. The first O-ring 1342 may serve to adjust the concentricity of two bearings that respectively support both ends of the rotating shaft 131, and attenuate vibration and impact transferred to the first bearing 134 to thereby achieve the reliability of the bearing.

When the rotating shaft 131 rotates, the first O-ring 1342 may absorb vibration and reduce impact transferred to the first bearing 134, allowing the vibration and impact to be attenuated.

A diameter of the first bearing accommodating portion 1203 may be less than a diameter of the outer ring portion 1201.

The connecting portion 1204 may be formed between the outer ring portion 1201 and the first bearing accommodating portion 1203.

The connecting portion 1204 radially extends between the outer ring portion 1201 and the first bearing accommodating portion 1203 to connect the outer ring portion 1201 and the first bearing accommodating portion 1203.

The connecting portion 1204 may have a rectangular cross-sectional shape.

The plurality of the connecting portions 1204 may be disposed to be spaced apart from one another in a circumferential direction of the outer ring portion 1201. In this implementation, three connecting portions 1204 are provided.

For example, the plurality of connecting portions 1204 may be disposed to be spaced apart from one another at equal intervals in the circumferential direction of the outer ring portion 1201 and be formed in the shape of three bridges, allowing three air inlet holes (axial through-holes) may be formed between the outer ring portion 1210 and the connecting portions 1204.

The first housing cover 120 may include a plurality of axial through-holes 1205. The plurality of axial through-holes 1205 may penetrate between the plurality of connecting portions 1204 in the axial direction (or up-and-down direction).

Air outside the housing 100 may be introduced into the housing 100 through the plurality of axial through-holes 1205.

A plurality of first coupling portions 1202 may be formed on the outer ring portion 1201 in a manner of protruding upward. The first coupling portion 1202 may be disposed on an extended line of the connecting portion 1204. The first coupling portion 1202 may have a protruding cylindrical shape.

The fan motor 1000 according to this implementation may include the second housing cover 1210.

The second housing cover 1210 is mounted to the lower portion of the housing 100. A second bearing accommodating portion 1214 is formed at the second housing cover 1210, and the second housing cover 1210 accommodates and supports the second bearing 135.

The second housing cover 1210 is fixedly installed inside the housing 100 beneath the impeller 136.

The second housing cover 1210 may have a structure that can serve as an axial flow vane. That is, the impeller 136 configured as the diagonal flow type and the second housing cover 1210 may be arranged vertically. In this case, the second housing cover 1210 that serves as the axial flow vane may be provided in a lower position of the impeller 136 configured as the diagonal flow type.

As the second housing cover 1210 has a structure of the axial flow vane, the fan motor 1000 according to this implementation may have a reduced radial length, and thus, a length of air flow path may be reduced than when a diagonal flow vane is applied. In addition, a change in air flow angle caused when an air flow path is bent as air flowing along the impeller 136 passes through the second housing cover 1210 may be minimized, thereby reducing interference due to the flow of air.

The fan motor 1000 may include the stator assembly 110 that is installed inside the housing 100 and the rotor assembly 130 that is rotatably mounted inside the stator assembly 110.

The rotor assembly 130 may include the rotating shaft 131, a permanent magnet 132, and a plurality of end plates 133.

The rotating shaft 131 may extend to cross a center of the housing 100 in the axial direction, and the center of the rotating shaft 131 may coincide with the center of the housing 100.

The rotating shaft 131 may include first and second bearing support portions 1311 and 1312, a permanent magnet mounting portion 1313, a shaft extension portion 1314, and an impeller mounting portion 1315.

The first and second bearing support portions 1311 and 1312 may be provided at both ends of the rotating shaft 131. The first bearing support portion 1311 may be disposed at an upper end of the rotating shaft 131, namely, at an upstream side of the permanent magnet mounting portion 1313 with respect to a flow direction of air.

The second bearing support portion 1312 may be disposed at a lower end of the rotating shaft 131, namely, at a downstream side of the impeller mounting portion 1315 with respect to the flow direction of air.

The bearings 134 and 135 may be configured as a first bearing 134 and a second bearing 135, respectively, and the both ends of the rotating shaft 131 are rotatably supported by the first bearing 134 and the second bearing 135.

The first bearing support portion 1311 may be coupled to the first bearing 134 by penetrating through a central hole thereof, and be supported by the first bearing 134. The second bearing support portion 1312 may be coupled to the second bearing 135 in a manner of penetrating through a central hole thereof, and be supported by the second bearing 135.

The permanent magnet mounting portion 1313 may be formed downward from the first bearing support portion 1311 to be slightly larger in diameter than the first bearing support portion 1311. The permanent magnet mounting portion 1313 may be disposed at a downstream side of the first bearing support portion 1311 with respect to the flow direction of air.

An entire length of the permanent magnet mounting portion 1313 may be greater than an entire length of the first bearing support portion 1311.

A shaft receiving hole may be axially formed through a center of the permanent magnet 132.

The permanent magnet mounting portion 1313 may penetrate through the shaft receiving hole.

The permanent magnet coupling portion 1313 may be longer in length than the permanent magnet 132. The permanent magnet 132 may slide along the permanent magnet mounting portion 1313 in the axial direction and be mounted to the permanent magnet mounting portion 1313.

In order to limit or suppress axial movement of the permanent magnet 132 from the permanent magnet mounting portion 1313, a plurality of end plates 133 may be disposed at upper and lower portions of the permanent magnet 132, respectively. With respect to the flow direction of air, the plurality of end plates 133 may be disposed at upstream and downstream sides of the permanent magnet 132, respectively, thereby suppressing axial movement of the permanent magnet 132.

The shaft extension portion 1314 disposed at a downstream side of the permanent magnet mounting portion 1313 with respect to the flow direction of air may extend in the axial direction to be larger in diameter than the permanent magnet mounting portion 1313.

When the diameter of the shaft extension portion 1314 is greater than the diameter of the permanent magnet mounting portion 1313, axial movement of the permanent magnet 132 in a downward direction may be suppressed, and thus, any one of the plurality of end plates 133 may be excluded.

The impeller mounting portion 1315 may be extend downward from the shaft extension portion 1314 to be smaller in diameter than the shaft extension portion 1314.

As the impeller mounting portion 1315 is coupled to the shaft coupling portion (not shown) of the impeller 136 in a penetrating manner, the impeller 136 may be mounted to the impeller mounting portion 1315.

A recessed portion 1363 may be formed at a lower portion of the impeller hub 1361 in a recessed manner, and the second bearing accommodating portion 1214 of the second housing cover 1210 may be formed inside the recessed portion 1363.

The recessed portion 1363 of the impeller 136 may cover the second bearing accommodating portion 1214 and the second bearing 135. Owing to the recessed portion 1363, it is possible to suppress the second bearing 135 from being separated from the second bearing accommodating portion 1214.

Further, as the recessed portion 1363 of the impeller 136 is configured to cover the second bearing accommodating portion 1214 and the second bearing 135, it is possible to prevent dust and other foreign substances contained in the air from being introduced into a gap between the second bearing accommodating portion 1214 and the second bearing 135.

In the case of the present disclosure, a rotating magnetic field may be produced around the rotor using a three-phase AC motor with 3 different phases.

The stator assembly 110 may include a stator core 111 and a plurality of stator coils 117, and the plurality of stator coils 117 may be wound around the stator core 111.

In this implementation, three stator coils 117 may be wound around the stator core 111, as illustrated in FIG. 2.

A three-phase (e.g., U phase, V phase, and W phase) AC power source may be connected to the three stator coils 117, so as to apply AC power to the stator coil 117. When the AC power is applied to the stator coil 117, a rotating magnetic field is generated around the rotor, allowing the rotor to rotate.

The stator core 111 may include a back yoke 112 and a plurality of teeth 114.

The back yoke 112 may have a hollow cylindrical shape, and the plurality of teeth 114 may be installed inside the back yoke 112.

The plurality of stator coils 117 may be wound around the plurality of teeth 114, respectively. Here, the number of teeth 114 may correspond to the number of stator coils 117.

The plurality of teeth 114 may be disposed to be spaced apart from one another in a circumferential direction of the back yoke 112.

A plurality of inner or internal flow paths may be formed inside the back yoke 112 in a manner of penetrating in an axial direction of the stator core 111. Accordingly, air introduced into the first accommodating portion 101 of the housing 100 may pass through the stator assembly 110 along the plurality of internal flow paths.

An insulator 118 may be provided between the stator core 111 and the stator coil 117. The insulator 118 includes an upper insulator 1185 and a lower insulator 1186.

The insulator 118 provides electrical insulation between the stator core 111 and the stator coil 117.

A plurality of power terminals 1190 may be respectively connected to one end portions (or ends) of the plurality of stator coils 117, so as to supply 3-phase AC power.

A plurality of neutral conductor terminals 1191 may be connected to the other end portions of the plurality of stator coils 117. The plurality of neutral conductor terminals 1191 connects the other end portions of the three-phase stator coils 117, respectively.

A terminal mounting part may be formed at an outer end portion of the upper insulator 1185. The terminal mounting part includes a power terminal mounting portion 1194 and a neutral conductor terminal mounting portion 1195.

The power terminal mounting portion 1194 and the neutral conductor terminal mounting portion 1195 may each have an accommodation space therein, allowing the power terminal 1190 and the neutral conductor terminal 1191 to be mounted on the power terminal mounting portion 1194 and the neutral wire terminal mounting portion 1195, respectively.

The power terminal mounting portion 1194 and the neutral conductor terminal mounting portion 1195 may be separated from each other by a partition wall. The power terminal 1190 may be mounted on the power terminal mounting portion 1194, so as to be connected to one end portion of the stator coil 117. The neutral conductor terminal 1191 may be mounted on the neutral conductor terminal mounting portion 1195, so as to be connected to another end portion of the stator coil 117.

The plurality of neutral conductor terminals 1191 may be connected by a connection ring 1192. The connection ring 1192 may have a circular ring shape.

A plurality of connection bars 1193 may be provided at the connection ring 1192. The plurality of connection bars 1193 may extend radially outward from an outer circumferential surface of the connection ring 1192. The connection bar 1193 may be bent in the axial direction so as to be connected to the neutral conductor terminal 1191. The plurality of neutral conductor terminals 1191 may be connected by the plurality of connection bars 1193 and the connection ring 1192.

As the rotor assembly 130 is disposed inside the stator assembly 110 with an air gap, the rotor assembly 130 may be rotated with respect to the stator assembly 110.

A rotor receiving hole is provided at an inner central portion of the stator core 111.

The permanent magnet 132 may be disposed in the rotor receiving hole.

The stator assembly 110 and the rotor assembly 130 may be disposed between the first bearing 134 and the second bearing 135.

As the stator assembly 110 and the rotor assembly 130 electromagnetically interact with each other, the rotor assembly 130 may be rotated with respect to the stator assembly 110.

The three stator coils 117 may produce a rotating magnetic field around the permanent magnet 132 by receiving 3-phase AC power.

The permanent magnet 132 is rotated by the rotating magnetic field, and the permanent magnet 132 and the rotating shaft 131 may be rotated integrally with each other.

In the present disclosure, the impeller 136 is disposed between the first bearing 134 and the second bearing 135.

As the rotor assembly 130 and the impeller 136 are disposed between the first bearing 134 and the second bearing 135, the both ends of the rotating shaft 131 are supported by the first bearing 134 and the second bearing 135, respectively, thereby increasing structural stability during rotation of the rotor assembly 130 and the impeller 136.

The stator assembly 110 and the rotor assembly 130 may be disposed at an upstream side of the impeller 136 with respect to the flow direction of air.

When the stator assembly 110 and the rotor assembly 130 are disposed at the upstream side of the impeller 136, cold air outside the housing 100 passes through an internal flow path 108 of the stator assembly 110 before being sucked into the impeller 136, thereby further enhancing cooling performance of the motor.

Since the plurality of stator coils 117, the permanent magnet 132, and the rotating shaft 131 are accommodated in the flow path formed inside the stator assembly 110, a space for air to axially pass through the internal flow path 108 is very narrow, causing a significant increase in flow resistance and flow loss. In the present disclosure, a bypass flow path 109 may be provided outside or inside the housing 100.

The bypass flow path 109 may be formed inside the housing 100 and be formed outside the stator assembly 110.

As illustrated in FIG. 1, the bypass flow path 109 may be disposed between the housing 100 and the stator core 111.

The bypass flow path 109 may be formed inside the first accommodating portion 101 to be recessed in a thickness direction.

In addition, the bypass flow path 109 may be provided in plurality inside the first accommodating portion 101. The number of bypass flow paths 109 may correspond to the number of windings of the stator coil 117.

The vane 1220 is disposed at a lower portion of the second housing cover 1210 and serves to guide a flow of air moving from the impeller 136.

The vane 1220 may include a vane hub 1223 having a cylindrical shape and a plurality of vane blades 1222 formed along an outer surface of the vane hub 1223 with the cylindrical shape.

The vane hub 1223 may have a hollow cylindrical shape.

The vane hub 1223 may be disposed in series with a first inner hub 1212 in the axial direction.

The vane hub 1223 may be mounted to a lower portion of the first inner hub 1212 and have the same diameter as the first inner hub 1212.

A center of the vane hub 1223 may coincide with a center of an outer cover 1211.

An insertion portion 1221 may be formed at an upper portion of the vane hub 1223. The first inner hub 1212 and the vane hub 1223 are coupled to each other through the insertion portion 1221. The vane hub 1223 may also be referred to as a "second inner hub" since it defines an inner hub by being coupled to the first inner hub 1212 along the axial direction. The insertion portion 1221 is formed at the upper portion of the vane hub 1223 to be smaller in diameter than the vane hub 1223.

The insertion portion 1221 may have a hollow cylinder shape. The insertion portion 1221 is inserted into the first inner hub 1212 and is coupled in an overlapping manner, allowing the first inner hub 1212 and the vane hub 1223 to be coupled to each other.

An upper portion of the insertion portion 1221 may extend radially inward. The upper portion of the insertion portion 1221 and an upper portion of the first inner hub 1212 may be disposed to overlap each other in the up-and-down direction. The upper portion of the insertion portion 1221 and the inner upper portion of the first inner hub 1212 may be coupled to each other by a fastening member such as a screw.

The plurality of vane blades 1222 may be provided in an annular space between an inner circumferential surface of the outer cover 1211 and an outer circumferential surface of the vane hub 1223. The plurality of vane blades 1222 and the vane hub 1223 may be accommodated in the outer cover 1211.

The plurality of vane blades 1222 may extend obliquely downward from the outer circumferential surface of the vane hub 1223. The vane blade 1222 may be implemented as an axial flow type.

The plurality of vane blades 1222 connects the outer cover 1211 and the vane hub 1223. An inner end of the vane blade 1222 is connected to the outer circumferential surface of the vane hub 1223, and an outer end of the vane blade 1222 is connected to the inner circumferential surface of the outer cover 1211.

The plurality of vane blades 1222 may be disposed to be spaced apart from one another in a circumferential direction of the vane hub 1223.

The plurality of vane blades 1222 may be provided between the outer cover 1211 and the vane hub 1223 in a fixed manner.

A discharge port (or outlet) 123 may be formed between the outer cover 1211 and the vane hub 1223. The discharge port 123 may be connected to communicate with the outside of the housing 100.

The discharge port 123 may discharge air, flowing from the second accommodation portion 102 to an inside of the second housing cover 1210, to the outside of the housing 100.

With this configuration, air sucked by the impeller 136 may flow to an internal flow path of the second housing cover 1210 from the second accommodating portion 102, namely, to the annular space between the inner circumferential surface of the outer cover 1211 and the outer circumferential surface of the vane hub 1223.

When the impeller 136 rotates according to rotation of the rotating shaft 131, air is introduced through the plurality of axial through-holes 1205 of the first housing cover 120 and the plurality of side holes 107 formed at the housing 100. The introduced air flows toward the impeller 136 along the inside of the housing 100.

More specifically, as the air sucked through the plurality of axial through-holes 1205 is introduced into the housing 100, the first bearing 134 disposed adjacent thereto may be cooled. In addition, the low-temperature air introduced through the plurality of the axial through-holes 1205 and the plurality of the side holes 107 may directly cool heat generated when the stator 142 and the rotor 141 are driven.

As a result, cooling efficiency may be increased compared to the related art method in which a stator and a rotor are cooled by air that has passed through an impeller.

That is, in the conventional motor, the impeller is located in an upper position so that air of an increased temperature cools the rotor and the stator. However, in the present disclosure, air introduced from the outside can first cool the rotor assembly 130 and the stator assembly 110. Accordingly, the outside air before an increase in temperature can first cool the rotor assembly 130 and the stator assembly 110, thereby improving the cooling efficiency.

An inverter 1250 may be provided at the upper portion of the housing 100.

The inverter 1250 may include a printed circuit board (PCB) 1251 and semiconductor devices mounted to the PCB 1251. The semiconductor devices may include an insulated gate bipolar transistor (IGBT), a capacitor, and the like.

The PCB 1251 may have a disk shape. The PCB 1251 may be spaced apart from the first housing cover 120 in the axial direction. The PCB 1251 may be disposed to overlap the first housing cover 120 in the axial direction.

A plurality of second coupling portions 1252 may protrude downward from a lower surface of the PCB 1251.

The second coupling portion 1252 is configured to surround and accommodate the first coupling portion 1202. The second coupling portion 1252 may have a cylindrical shape with a diameter that is greater than a diameter of the first coupling portion 1202.

An axial or vertical height of the second coupling portion 1252 may be greater than an axial or vertical height of the first coupling portion 1202.

The plurality of first and second coupling portions 1202 and 1252 may be disposed to be spaced apart from one another at equal intervals in a circumferential direction of the PCB 1251.

With this configuration, the first coupling portions 1202 and the second coupling portions 1252 are fitted together in pairs, allowing the PCB 1251 to be coupled to the first housing cover 120.

A plurality of lateral flow paths 1253 may be formed between the first housing cover 120 and the PCB 1251.

The plurality of lateral flow paths 1253 may radially penetrate between the plurality of first and second coupling portions 1202 and 1252. Heights of the plurality of lateral flow paths 1253 may be determined by heights of the first and second coupling portions 1202 and 1252. The plurality of lateral flow paths 1253 may be defined by an interval between the plurality of first and second coupling portions 1202 and 1252.

The plurality of lateral flow paths 1253 may be disposed in an upper position of the plurality of side holes 107.

The lateral flow path 1253 and the side hole 107 may overlap in the up-and-down direction or the axial direction.

The lateral flow path 1253 and the side hole 107 may be connected to communicate with the axial through-hole 1205 of the first housing cover 120.

Circumferential lengths of the lateral flow path 1253 and the side hole 107 may extend at the same angle. In addition, a circumferential length of the outermost edge portion of the axial through-hole 1205 may extend at the same angle as the circumferential lengths of the lateral flow path 1253 and the side hole 107.

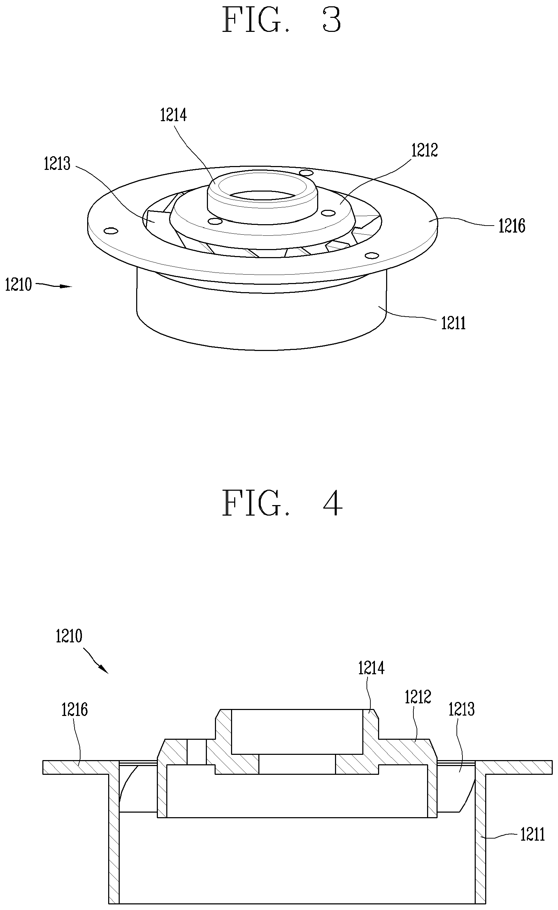

FIG. 3 is a perspective view of the second housing cover 1210. FIG. 4 is a cross-sectional view of the second housing cover 1210 of FIG. 3.

As described above, the second housing cover 1210 may be mounted to the lower portion of the housing 100.

The second housing cover 1210 may include the outer cover 1211, a second flange 1216, the first inner hub 1212, the second bearing accommodating portion 1214, and a plurality of housing cover blades 1213.

The outer cover 1211 may have a hollow cylindrical shape. The outer cover 1211 may define an outer surface of the second housing cover 1210. The outer cover 1211 may have a constant or identical diameter in the up-and-down direction.

The second flange 1216 may extend radially outward from an upper end of the outer cover 1211. Here, the first flange 103 (see FIG. 2) formed at the housing 100 and the second flange 1216 may be disposed to overlap in the up-and-down direction. However, a diameter of the second flange 1216 may be slightly less than a diameter of the first flange 103.

Here, a thickness of the first flange 103 may be greater than a thickness of the second flange 1216.

A flange accommodating groove may be formed in a lower surface of the first flange 103 in a concave manner. The flange accommodating groove may accommodate the second flange 1216 therein. The flange accommodating groove and the second flange 1216 may be coupled to each other.

The first flange 103 and the second flange 1216 may each include a plurality of fastening holes. The plurality of fastening holes may be formed through the first flange 103 and the second flange 1216 in a thickness direction.

The plurality of fastening holes may be spaced apart from one another in a circumferential direction of the first flange 103, and the plurality of fastening holes may be spaced apart from one another in a circumferential direction of the second flange 1216.

With this configuration, the first flange 103 and the second flange 1216 may be coupled to each other. Fastening members, such as a screw, may respectively pass through the plurality of fastening holes to be fastened to the first flange 103 and the second flange 1216, allowing the second housing cover 1210 to be coupled to the lower portion of the housing 100.

The first inner hub 1212 may have a cylindrical shape. A diameter of the first inner hub 1212 may be less than a diameter of the outer cover 1211.

The upper portion of the first inner hub 1212 may be closed (or blocked) and the lower portion of the first inner hub 1212 may be open.

An axial length of the outer cover 1211 may be greater than an axial length of the first inner hub 1212.

An upper end portion of the first inner hub 1212 may protrude upward from an upper end thereof. A center of the first inner hub 1212 may coincide with a center of the outer cover 1211.

The second bearing accommodating portion 1214 may be provided at the upper end portion of the first inner hub 1212. The second bearing accommodating portion 1214 may protrude upward from the upper end portion of the first inner hub 1212.

The second bearing accommodating portion 1214 may accommodate the second bearing 135 therein.

The second bearing accommodating portion 1214 may be open upward. Through this open upper portion, the second bearing 135 may be accommodated in the second bearing accommodating portion 1214.

The second bearing 135 may be configured as a ball bearing. A second holder 1351 with a circular ring shape may be coupled to an outer circumferential surface of the second bearing 135 so as to surround the second bearing 135.

A second O-ring 1352 may be installed on an outer circumferential surface of the second holder 1351. One or a plurality of second O-rings 1352 may be provided.

The plurality of second O-rings 1352 may be spaced apart from each other in a lengthwise direction of the second holder 1351.

Since the configurations of the second O-ring 1352 and the second holder 1351 are similar or equal to the configurations of the first O-ring 1342 and the first holder 1341, a redundant description will be omitted.

In the depicted example, the first O-ring 1342 is provided at an outer surface of the first holder 1341, and the second O-ring 1352 is provided at an outer surface of the second holder 1351. However, the present disclosure is not limited thereto. The first O-ring 1342 may be provided at the outer surface of the first holder 1341, and the second O-ring 1352 may not be provided at the outer surface of the second holder 1351. Conversely, the first O-ring 1342 may not be provided at the outer surface of the first holder 1341, and the second O-ring 1352 may be provided at the outer surface of the second holder 1351.

A wave washer 1215 may be accommodated in the second bearing accommodating portion 1214. The wave washer 1215 may have a wavy ring shape. The wave washer 1215 may be disposed between an inner bottom surface of the second bearing accommodating portion 1214 and the second bearing 135.

The wave washer 1215 may reduce a surface pressure by evenly distributing pressure of the second bearing 135.

The second O-ring 1352 may allow the second bearing 135 to be coupled to an inner surface of the second bearing accommodating portion 1214 in a close contact manner. Like a spring washer, the wave washer 1215 can serve to prevent the second bearing 135 from being released or separated from the second bearing accommodating portion 1214.

The plurality of housing cover blades 1213 may be provided in an annular space between the inner circumferential surface of the outer cover 1211 and an outer circumferential surface of the first inner hub 1212.

The plurality of housing cover blades 1213 may each protrude from the outer circumferential surface of the first inner hub 1212 to the inner circumferential surface of the outer cover 1211.

The plurality of housing cover blades 1213 may each protrude from the outer circumferential surface of the first inner hub 1212 in a manner of extending obliquely downward from the upper portion of the first inner hub 1212. The housing cover blade 1213 may be configured as an axial flow type.

The plurality of housing cover blades 1213 is configured to connect the outer cover 1211 and the first inner hub 1212. Inner ends of the plurality of housing cover blades 1213 may be connected to the outer circumferential surface of the first inner hub 1212, and outer ends of the plurality of housing cover blades 1213 may be connected to the inner circumferential surface of the outer cover 1211.

The plurality of housing cover blades 1213 may be disposed to be spaced apart from one another in a circumferential direction of the first inner hub 1212.

The plurality of housing cover blades 1213 may be fixed between the outer cover 1211 and the first inner hub 1212.

That is, as the housing cover blade 1213 is configured as the axial flow type to thereby serve as an axial flow vane, a radial length of the second housing cover 1210 may be reduced compared to when a diagonal flow vane is employed. This may result in reducing an air flow length. Thus, the size and weight of the fan motor may be reduced compared to when the diagonal flow vane is applied. Further, interference in the flow of air may be prevented.

As the second housing cover 1210 is provided in parallel along the axial direction, a mold may be easily removed in the up-and-down direction to thereby facilitate manufacturing. This may lead to a simpler manufacturing process of the second housing cover 102, allowing economic feasibility of mass production to be achieved.

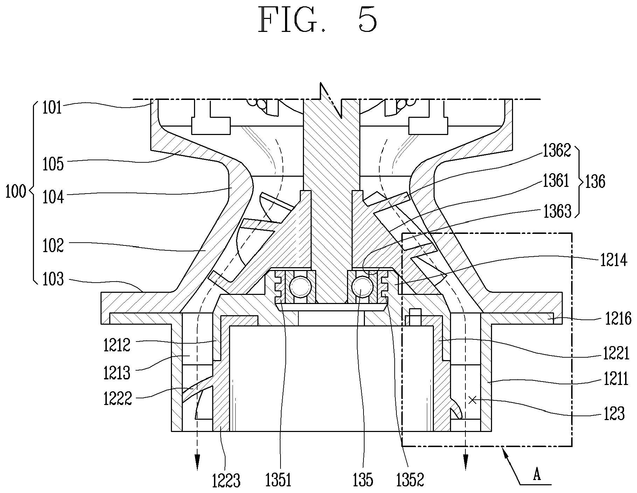

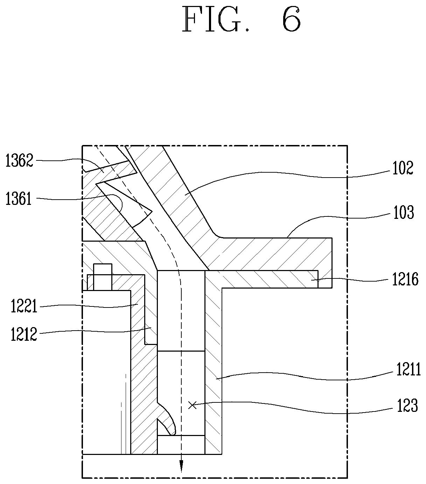

FIG. 5 is a schematic view illustrating a flow of air when the impeller 136 and the second housing cover 1210 are installed inside the housing 100, and FIG. 6 is an enlarged view of an area "A" of FIG. 5.

The impeller hub 1361 of the impeller 136 configured as a diagonal flow type may have a conical shape with a diameter that gradually increases from the top toward the bottom.

The housing cover blades 1213 and the vane blades 1222 of the vane 1220 are arranged to be aligned with each other inside the second housing cover 1210, allowing air sucked by the impeller 136 to move to the outside of the housing 100.

When taking a close look at the flow of air, air introduced through the lateral flow path 1253 of the inverter 1250 and the side hole 107 of the motor passes through the axial through-hole 1205 of the first housing cover 120 to flow into the stator assembly 110. After passing through the stator assembly 110, the air passes through the inclined portion 105 and the neck portion 104, passes through the impeller 136 and the housing cover blade 1213 of the second housing cover 1210, and then passes through the vane blade 1222 to be discharged outside.

In this implementation, as the second housing cover 1210 and the impeller 136 configured as the diagonal flow type are arranged vertically, and the housing cover blade 1213 provided on the second housing cover 1210 is configured as the axial flow type, a change in air flow angle caused by a bent air flow path when air flowing along the second housing cover 1210 passes through the second housing cover 1210 may be minimized, thereby reducing interference due to the flow of air.

In addition, the vane blades 1222 configured as the axial flow type and the housing cover blades 1213 are arranged in two layers (columns) in parallel to facilitate the flow of air, thereby minimizing flow resistance of air.

Further, as illustrated in FIG. 6, air flowing along the inside of the housing 100 after passing through the rotor assembly 130 and the stator assembly 110 may come or join at the inclined portion 105. The air that has passed through the neck portion 104 where a cross-sectional area of the flow path is gradually narrowed flows to the upstream side of the impeller 136. The air that has passed through the neck portion 104 receives a rotational force from the impeller 136 to move along an axial direction of the second accommodating portion 102.

The housing cover blade 1213 and the vane blade 1222 of the second housing cover 1210 are respectively configured as an axial flow type, allowing a flow direction of air that has passed through the impeller 136 to be guided in the axial direction.

That is, the air that has passed through the impeller 136 sequentially passes through the housing cover blade 1213 and the vane blade 1222 of the second housing cover 1210 and is then discharged to the outside of the housing 100, allowing air to blow in one direction.

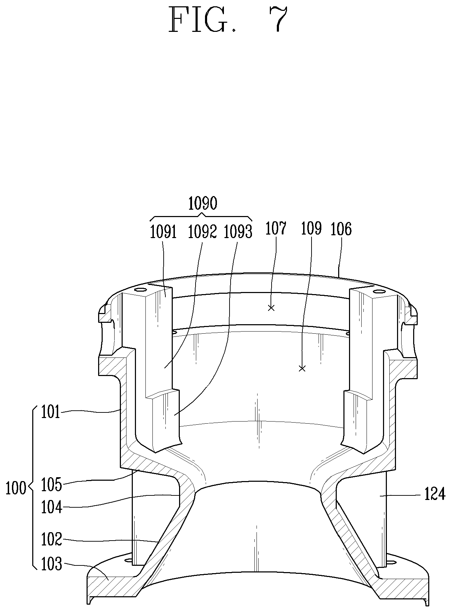

FIG. 7 is a cut-away view illustrating an inside of the housing 100, (a) of FIG. 8 is a (a) of FIG. 8 is a cross-sectional view illustrating an inside of the housing 100, and (b) of FIG. 8 is a schematic view illustrating an inclination (θ) of an inclined portion of the housing 100 represented by a triangle, which is determined by a half value of the difference between an inner diameter (D1) of a first accommodating portion and an inner diameter (D2) of a neck portion, and a height difference (H) between front and rear ends of the inclined portion.

As described above, the neck portion 104 is formed at the housing 100 and is provided between the first accommodating portion 101 and the second accommodating portion 102. The diameter of the neck portion 104 may be less than the diameter of the first accommodating portion 101.

The inclined portion 105 is formed between the lower end of the first accommodating portion 101 and the neck portion 104, and a diameter of the inclined portion 105 gradually decreases from the first accommodating portion 101 toward the neck portion 104.

In detail, the inclined portion 105 may extend from the lower end of the first accommodating portion 101 in the circumferential direction and be inclined downward from the lower end of the first accommodating portion 101 to the neck portion 104.

The inclined portion 105 may be located at a central portion of the housing 100 in the lengthwise direction.

Outer and inner surfaces of the inclined portion 105 may be inclined at different inclinations.

The inner surface of the inclined portion 105 may be more inclined than the outer surface thereof.

An inner portion or point to which the first accommodating portion 101 and the inclined portion 105 are connected may be rounded in a curved shape.

With this configuration, flow resistance of air flowing from the first accommodating portion 101 to the inclined portion 105 may be minimized.

An inner surface of the neck portion 104 may be rounded in a curved shape.

A curvature of the neck portion 104 may be less than a curvature of the connected portion of the first accommodating portion 101 and the inclined portion 105.

With this configuration, an inner curved surface of the neck portion 104 is curved, and thus, the air flow resistance may be minimized when air passes through the neck portion 104 from the first accommodating portion 101 toward the second accommodating portion 102.

The neck portion 104 may be connected to an upper end portion of the second accommodating portion 102. The neck portion 104 is a portion that is the smallest in diameter of the internal flow path penetrating through the housing 100.

A plurality of support parts 1090 may be provided inside the housing 100. The plurality of support parts 1090 is in contact with an outer circumferential surface of the stator core 111 to support the stator core 111.

The plurality of support parts 1090 may protrude radially inward from an inner circumferential surface of the first accommodating portion 101.

The plurality of support parts 1090 may be spaced apart from each other in a circumferential direction of the housing 100. The plurality of support parts 1090 may be disposed to be spaced apart from one another with the same intervals in the circumferential direction.

In this implementation, three support parts 1090 are provided, and the plurality of support parts 1090 may be disposed to be 120 degrees apart from one another along the circumferential direction.

The plurality of bypass flow paths 109 and the plurality of support parts 1090 may be alternately disposed in the circumferential direction of the housing 100.

The support parts 1090 may include first to third support portions 1091 to 1093.

The first support portion 1091 may protrude radially inward from the inner circumferential surface of the intake port 106. A plurality of first support portions 1091 may be disposed between the plurality of side holes 107.

The second support portion 1092 may be provided at a lower portion of the first support portion 1091.

The second support portion 1092 may extend downward from the upper end of the first accommodating portion 101. The second support portion 1092 may protrude radially inward from the inner circumferential surface of the first accommodating portion 101. A plurality of second support portions 1092 is configured to support an outer circumferential surface of the back yoke 112 of the stator core 111.

The third support portion 1093 may be provided at a lower portion of the second support portion 1092.

The third support portion 1093 may protrude radially outward from the inner circumferential surface of the first accommodating portion 101.

The third support portion 1093 may further protrude radially outward from a lower end of the second support portion 1092.

As illustrated in FIG. 1, air is introduced through the lateral flow path 1253 of the inverter 1250 and the side hole 107 of the motor and then passes through the stator assembly 110 through the axial through-hole 1205 of the first housing cover 120. Thereafter, as illustrated in (a) of FIG. 8, the air passes through the inclined portion 105 and the neck portion 104, passes through the housing cover blade 1213 of the second housing cover 1210 and the vane blade 1222, and is then discharged outside.

Here, the inclined portion 105 may have a tapered shape with a decreasing diameter from the first accommodating portion 101 to the neck portion 104, and an angle θ of the inclined portion 105 may be determined by a half value D3 of the difference between an inner diameter D1 of the first accommodating portion 101 and an inner diameter D2 of the neck portion 104, and a height difference H between front and rear ends of the inclined portion 105.

In detail, as shown in (a) and (b) of FIG. 8, the angle θ of the inclined portion 105 may be determined by the Equation 1 below.

[Equation 1]

$$\text{Angle of the inclined portion } (\theta) = \tan^{-1}\left(\frac{H}{D3}\right), \quad D3 = \left(\frac{(D1 - D2)}{2}\right)$$

Here, D1 denotes an inner diameter of the first accommodating portion, D2 denotes an inner diameter of the neck portion, and H denotes a height difference between the front and rear ends of the inclined portion.

That is, the fan motor according to the present disclosure has a structure in which the second housing cover 1210 is installed in parallel with the diagonal flow impeller 136, and the housing cover blade 1213 provided at the second housing cover 1210 is configured as the axial flow type, thereby minimizing a change in air flow angle caused when an air flow path is bent as air flowing along the impeller 136 passes through the second housing cover 1210. This may result in reducing interference due to the flow of air to thereby prevent a decrease in fan efficiency.

In the present disclosure, even if the rotating shaft 131 is rotated at a high speed of 100,000 rpm or higher, the rotating shaft 131 can be supported by the first bearing 134 and the second bearing 135 that respectively support the both ends of the rotating shaft 131.

More specifically, the first and second bearings 134 and 135 are securely supported by the first bearing accommodating portion 1203 of the first housing cover 120 and the second bearing accommodating portion 1214 of the second housing cover 1210, respectively. This may result in suppressing impact from being applied to the bearings to thereby prevent a reduction in lifespan of the bearings.

Thus, even when the first bearing 134 and the second bearing 135 that respectively support the both ends of the rotating shaft 131 are located far from each other, due to the motor design, the rotating shaft 131 may be securely supported during high-speed rotation of the motor.

As a distance from the rotor assembly 130 to the first bearing 134, and a distance from the rotor assembly 130 to the second bearing 135 are different, and the impeller 136 is disposed adjacent to the second bearing 135, shock or impact may be absorbed in a more stable manner, allowing the bearings to be securely held in position during the high-speed rotation of the motor.

As described above, the first bearing 134 may be configured as a ball bearing, and the first holder 1341 may be coupled to the outer circumferential surface of the first bearing 134. The first holder 1341 may have a cylindrical shape.

As the first O-ring 1342 is installed at the outer circumferential surface of the first holder 1341, vibration caused by the high-speed rotation of the motor may be prevented and self-aligning may be achieved.

As the first O-ring 1342 is provided in plurality, vibration and impact transferred to the first bearing 134 may be more smoothly absorbed.

Here, the second bearing 135 may be configured as a ball bearing made up of an outer ring, an inner ring, and a plurality of balls. The second bearing 135 may have a structure in which an O-ring is installed inside an O-ring holder like the first bearing 134.

In the fan motor 1000 according to the implementations disclosed herein, since air introduced as the impeller 136 rotates first comes into contact with the stator assembly 110 and the rotor assembly 130, heat generated by operation of the motor may be cooled, allowing heat generated by the high-speed rotation of the motor to be more effectively removed.

That is, in the present disclosure, a flow path of air introduced is configured to be different from the conventional one. Air introduced from the outside first comes in contact with the stator assembly 110 and the rotor assembly 130 to thereby increase the cooling efficiency of the motor with air. In addition, as the bearings are supported by the first housing cover 120 and the second housing cover 1210, and the second housing cover 1210 of the axial flow type is located at a position adjacent to the second housing cover 1210 of the diagonal flow type impeller 136, a flow loss may be reduced due to a reduction in flow length of air. Further, a radial length of the housing 100 may be reduced due to application of the axial flow type second housing cover 1210, thereby achieving the size and weight reduction of the motor.

The foregoing implementations are merely given of those implementations for practicing a fan motor according to the present disclosure.

However the present disclosure is limited by the following claims.

**Claims**

1. A fan motor, comprising:

   a housing (100);
   a stator assembly (110) installed inside the housing (100);
   a rotor assembly (130) rotatably mounted inside the stator assembly (110);
   an impeller (136) configured to generate a flow of air by receiving power from the rotor assembly (130);
   a first housing cover (120) installed on one side of the housing (100) and provided therein with a first bearing (134);
   a second housing cover (1210) installed on another side of the housing (100) and provided therein with a second bearing (135); and
   an axial flow type vane (1220) installed at a lower portion of the second housing cover (1210) to guide flowing of air introduced from the second housing cover (1210),
   wherein the impeller (136) is configured as a diagonal flow type of sucking air an axial direction and discharging the air in a direction inclined to the axial direction, and the second housing cover (1210) is configured as an axial flow type, so that the impeller and the second housing cover (1210) are arranged along an axial direction, **characterized in that** the housing (100) includes:

   a first accommodating portion (101) in which the rotor assembly (130) and the stator assembly (110) are accommodated;
   a second accommodating portion (102) disposed at one side of the first accommodating portion (101), and in which the impeller (136) is accommodated;
   a neck portion (104) provided between the first accommodating portion (101) and the second accommodating portion (102) to have a diameter smaller than a diameter of the first accommodating portion (101);
   an inclined portion (105) inclined from the first accommodating portion (101) toward the neck portion (104), wherein the inclined portion (105) has a tapered shape with a diameter that gradually decreases from the first accommodating portion (101) toward the neck portion (104); and
   an intake port (106) formed at an upper portion of the first accommodating portion (101) and configured to suck air into the housing (100).

2. The fan motor of claim 1, wherein the second housing cover (1210) is arranged to accommodate and support the second bearing (135), is fixedly installed inside the housing (100), and is located at a downstream side of the impeller (136) with respect to a flow direction of air, and
   wherein the housing (100) and the second housing cover (1210) are arranged such that air, introduced by the impeller (136) driven, flows toward the second housing cover (1210) while coming in contact with the stator assembly (110) and the rotor assembly (130).

3. The fan motor of claim 1 or 2, wherein the second housing cover (1210) includes:

   an outer cover (1211);
   a first inner hub (1212) disposed inside the outer cover (1211);
   a second bearing accommodating portion (1214) that protrudes from one side of the first inner hub (1212) toward the impeller (136) and is arranged to accommodate the second bearing (135) therein; and
   a plurality of housing cover blades (1213) protruding in a helical shape from an outer circumferential surface of the first inner hub (1212) toward an inner circumferential surface of the outer cover (1211), so as to connect the outer cover (1211) and the first inner hub (1212).

4. The fan motor of claim 3, wherein the plurality of housing cover blades (1213) are radially extended and disposed to be inclined toward an inner surface of the housing (100) at a predetermined angle, so as to respectively guide a flow of air moved by the impeller (136).

5. The fan motor of claim 3 or 4, wherein the vane (1220) includes:

   a second inner hub (1223) accommodated in the outer cover (1211) and disposed in series with the first inner hub (1212), and
   a plurality of vane blades (1222) protruding in a helical shape from an outer circumferential surface of the second inner hub toward the inner circumferential surface of the outer cover (1211).

**6.** The fan motor of claim 5, wherein the plurality of vane blades (1222) are disposed at respective positions corresponding to positions of the plurality of housing cover blades (1213) provided at the second housing cover (1210).

**7.** The fan motor of any one of claims 1 to 6, wherein the first housing cover (120) is coupled to an upstream end of the housing (100) with respect to a flow direction of air,

wherein the first housing cover (120) is disposed at an upstream side of the impeller (136) with respect the flow direction of the air,
wherein the first housing cover (120) comprises a first bearing accommodating portion (1203) having a recessed central portion in which the first bearing (134) is accommodated.

**8.** The fan motor of claim 7, wherein the first housing cover (120) further includes:

an outer ring portion (1201) provided at an edge thereof and having a cylindrical shape with a constant height; and
a connecting portion (1204) extending to connect the first bearing accommodating portion (1203) and the outer ring portion (1201).

**9.** The fan motor of claim 8, wherein the first housing cover (120) is provided with a plurality of axial through-holes (1205) so as to allow air to be sucked at a position adjacent to the first bearing accommodating portion (1203), and wherein each of the plurality of axial through-holes (1205) is provided between the outer ring portion (1201) and the connecting portion (1204).

**10.** The fan motor of any one of claims 1 to 9, wherein the impeller (136) includes:

a hub (1361) having a conical shape; and
a plurality of impeller blades (1362) protruding along an outer circumferential surface of the hub (1361).

**11.** The fan motor of any one of claims 1 to 10, wherein the impeller (136), the rotor assembly (130), and the stator assembly (110) are located between the first bearing (134) and the second bearing (135) along the axial direction, and wherein air that has passed through the first housing cover (120) is discharged to the outside by sequentially passing through the first bearing (134), the rotor assembly (130) and the stator assembly (110), the impeller (136), and the second housing cover (1210).

**12.** The fan motor of claim 1, wherein an inclination of the inclined portion is determined by a half value (D3) of the difference between an inner diameter (D1) of the first accommodating portion (101) and an inner diameter (D2) of the neck portion (104), and a height difference (H) between front and rear ends of the inclined portion.

**13.** The fan motor of claim 12, wherein an angle θ of the inclined portion (105) is determined by Equation 1 below.

[Equation 1]

Angle of the inclined portion (θ)= $\tan^{-1}(\frac{H}{D3})$, D3= $(\frac{(D1-D2)}{2})$,

where D1 denotes an inner diameter of the first accommodating portion, D2 denotes an inner diameter of the neck portion, and H is a height difference between the front and rear ends of the inclined portion.

**14.** The fan motor of any one of claims 1 to 13, wherein a first flange (103) that protrudes radially outward is provided at a lower end of the housing (100),

wherein a second flange (1216) that protrudes radially outward is provided at the second housing cover (1210), and
wherein the first flange (103) and the second flange (1216) are disposed to overlap each other so as to be in close contact with each other.

EP 4 012 187 B1

**Patentansprüche**

1. Lüftermotor, umfassend

   ein Gehäuse (100);
   eine Statoranordnung (110), die innerhalb des Gehäuses (100) installiert ist;
   eine Rotoranordnung (130), die drehbar innerhalb der Statoranordnung (110) gelagert ist;
   ein Laufrad (136), welches derart konfiguriert ist, dass es durch die Aufnahme von Energie von der Rotoranordnung (130) einen Luftstrom erzeugt;
   eine erste Gehäuseabdeckung (120), die an einer Seite des Gehäuses (100) angebracht ist und in ihrem Inneren ein erstes Lager (1341) aufweist;
   eine zweite Gehäuseabdeckung (1210), die an einer anderen Seite des Gehäuses (100) angebracht ist und in ihrem Inneren ein zweites Lager (135) aufweist; und
   ein Flügelrad (1220) vom Axialstromtyp, das an einem unteren Abschnitt der zweiten Gehäuseabdeckung (1210) installiert ist, um ein Strömen von Luft zu leiten, die von der zweiten Gehäuseabdeckung (1210) eingeführt wird, wobei das Laufrad (136) als ein Typ mit diagonaler Strömung zum Ansaugen von Luft in einer axialen Richtung und zum Ausleiten von Luft in einer zu der axialen Richtung geneigten Richtung ausgebildet ist, und die zweite Gehäuseabdeckung (1210) als ein Typ mit axialem Luftstrom ausgebildet ist, so dass das Laufrad und die zweite Gehäuseabdeckung (1210) entlang einer axialen Richtung angeordnet sind,
   **dadurch gekennzeichnet, dass** das Gehäuse (100) umfasst:

   einen ersten Aufnahmeabschnitt (101), in dem die Rotoranordnung (130) und die Statoranordnung (110) aufgenommen sind;
   einen zweiten Aufnahmeabschnitt (102), der an einer Seite des ersten Aufnahmeabschnitts (101) angeordnet ist und in dem das Laufrad (136) aufgenommen ist;
   einen Verengungsabschnitt (104), welcher derart zwischen dem ersten Aufnahmeabschnitt (101) und dem zweiten Aufnahmeabschnitt (102) angeordnet ist, dass er einen Durchmesser besitzt, der kleiner als ein Durchmesser des ersten Aufnahmeabschnitts (101) ist;
   einen geneigten Abschnitt (105), der von dem ersten Aufnahmeabschnitt (101) in Richtung des Verengungsabschnitts (104) geneigt ist, wobei der geneigte Abschnitt (105) eine konische Form mit einem Durchmesser aufweist, der von dem ersten Aufnahmeabschnitt (101) in Richtung des Verengungsabschnitts (104) allmählich abnimmt; und
   eine Einlassöffnung (106), die an einem oberen Abschnitt des ersten Aufnahmeabschnitts (101) ausgebildet und derart konfiguriert ist, dass sie Luft in das Gehäuse (100) saugt.

2. Lüftermotor nach Anspruch 1, wobei die zweite Gehäuseabdeckung (1210) derart angeordnet ist, dass sie das zweite Lager (135) aufnimmt und lagert, fest im Inneren des Gehäuses (100) installiert ist und sich in Bezug auf eine Luftströmungsrichtung auf einer stromabwärtigen Seite des Laufrads (136) befindet, und wobei das Gehäuse (100) und die zweite Gehäuseabdeckung (1210) derart angeordnet sind, dass von dem angetriebenen Laufrad (136) eingeführte Luft in Richtung der zweiten Gehäuseabdeckung (1210) strömt, während sie mit der Statoranordnung (110) und der Rotoranordnung (130) in Kontakt kommt.

3. Lüftermotor nach Anspruch 1 oder 2, wobei die zweite Gehäuseabdeckung (1210) umfasst:

   eine äußere Abdeckung (1211);
   eine erste Innennabe (1212), die innerhalb der äußeren Abdeckung (1211) angeordnet ist;
   einen zweiten Lageraufnahmeabschnitt (1214), der von einer Seite der ersten inneren Nabe (1212) in Richtung des Laufrads (136) vorsteht und derart angeordnet ist, dass er das zweite Lager (135) darin aufnimmt; und
   eine Vielzahl von Gehäuseabdeckungsleitschaufeln (1213), die in einer spiralförmigen Form von einer äußeren Umfangsfläche der ersten Innennabe (1212) in Richtung einer inneren Umfangsfläche der äußeren Abdeckung (1211) vorstehen, um die äußere Abdeckung (1211) mit der ersten Innennabe (1212) zu verbinden.

4. Lüftermotor nach Anspruch 3, wobei die Vielzahl von Gehäuseabdeckungsleitschaufeln (1213) radial verlaufen und derart angeordnet sind, dass sie in Richtung einer Innenfläche des Gehäuses (100) unter einem vorbestimmten Winkel geneigt sind, um jeweils einen von dem Laufrad (136) bewegten Luftstrom zu leiten.

5. Lüftermotor nach Anspruch 3 oder 4, wobei das Flügelrad (1220) umfasst:

eine zweite Innennabe (1223), die in der äußeren Abdeckung (1211) aufgenommen ist und in Reihe mit der ersten inneren Nabe (1212) angeordnet ist, und

eine Vielzahl von Flügelradschaufeln (1222), die in einer spiralförmigen Anordnung von einer äußeren Umfangsfläche der zweiten Innennabe in Richtung der inneren Umfangsfläche der äußeren Abdeckung (1211) vorstehen.

6. Lüftermotor nach Anspruch 5, wobei die Vielzahl von Flügeln (1222) an jeweiligen Positionen angeordnet ist, die Positionen der Vielzahl von Gehäuseabdeckungsschaufeln (1213) entsprechen, die an der zweiten Gehäuseabdeckung (1210) angeordnet sind.

7. Lüftermotor nach einem der Ansprüche 1 bis 6, wobei die erste Gehäuseabdeckung (120) an einem stromaufwärtigen Ende des Gehäuses (100) in Bezug auf eine Luftströmungsrichtung angebracht ist,

wobei die erste Gehäuseabdeckung (120) an einer stromaufwärtigen Seite des Laufrads (136) in Bezug auf die Luftströmungsrichtung angeordnet ist,

wobei die erste Gehäuseabdeckung (120) einen ersten Lageraufnahmeabschnitt (1203) mit einem ausgesparten Mittelabschnitt aufweist, in dem das erste Lager (134) aufgenommen ist.

8. Lüftermotor nach Anspruch 7, wobei die erste Gehäuseabdeckung (120) ferner umfasst:

einen Außenringabschnitt (1201), der an einer Kante davon vorgesehen ist und eine zylindrische Form mit konstanter Höhe aufweist; und

einen Verbindungsabschnitt (1204), welcher derart verläuft, dass er den ersten Lageraufnahmeabschnitt (1203) mit dem Außenringabschnitt (1201) verbindet.

9. Lüftermotor nach Anspruch 8, wobei die erste Gehäuseabdeckung (120) mit einer Vielzahl von axialen Durchgangslöchern (1205) versehen ist, um zu ermöglichen, dass Luft an einer Position neben dem ersten Lageraufnahmeabschnitt (1203) angesaugt wird, und

wobei jedes der Vielzahl von axialen Durchgangslöchern (1205) zwischen dem Außenringabschnitt (1201) und dem Verbindungsabschnitt (1204) angeordnet ist.

10. Lüftermotor nach einem der Ansprüche 1 bis 9, wobei das Laufrad (136) umfasst:

eine Nabe (1361) mit einer konischen Form; und

eine Vielzahl von Laufradschaufeln (1362), die entlang einer äußeren Umfangsfläche der Nabe (1361) vorstehen.

11. Lüftermotor nach einem der Ansprüche 1 bis 10, wobei sich die Laufrad (136), die Rotoranordnung (130) und die Statoranordnung (110) zwischen dem ersten Lager (134) und dem zweiten Lager (135) entlang der axialen Richtung befinden und

wobei die Luft, die durch die erste Gehäuseabdeckung (120) geströmt ist, nach außen ausgeleitet wird, indem sie nacheinander das erste Lager (134), die Rotoranordnung (130) und die Statoranordnung (110), das Laufrad (136) und die zweite Gehäuseabdeckung (1210) durchläuft.

12. Lüftermotor nach Anspruch 1, wobei eine Neigung des geneigten Abschnitts durch einen halben Wert (D3) der Differenz zwischen einem Innendurchmesser (D1) des ersten Aufnahmeabschnitts (101) und einem Innendurchmesser (D2) des Verengungsabschnitts (104) bestimmt wird, und eine Höhendifferenz (H) zwischen vorderen und hinteren Enden des geneigten Abschnitts bestimmt wird.

13. Lüftermotor nach Anspruch 12, wobei ein Winkel θ des geneigten Abschnitts (105) durch die folgende Gleichung 1 bestimmt wird.

[Gleichung 1]

$$\text{Winkel des geneigten Abschnitts } (\theta) = \tan^{-1}\left(\frac{H}{D3}\right), \quad D3 = \left(\frac{(D1 - D2)}{2}\right),$$

wobei D1 einen Innendurchmesser des ersten Aufnahmeabschnitts bezeichnet, D2 einen Innendurchmesser des Verengungsabschnitts bezeichnet und H eine Höhendifferenz zwischen dem vorderen und hinteren Ende des geneigten Abschnitts ist.

14. Lüftermotor nach einem der Ansprüche 1 bis 13, wobei ein erster Flansch (103), der radial nach außen vorsteht, an einem unteren Ende des Gehäuses (100) angeordnet ist,

wobei ein zweiter Flansch (1216), der radial nach außen vorsteht, an der zweiten Gehäuseabdeckung (1210) angeordnet ist, und
wobei der erste Flansch (103) und der zweite Flansch (1216) derart angeordnet sind, dass sie sich überlappen, sodass sie in engem Kontakt miteinander stehen.

**Revendications**

1. Moteur de ventilateur, comprenant

un boîtier (100) ;
un ensemble stator (110) installé à l'intérieur du boîtier (100) ;
un ensemble rotor (130) monté en rotation à l'intérieur de l'ensemble stator (110) ;
une turbine (136) configurée pour générer un flux d'air par la réception de puissance en provenance de l'ensemble rotor (130) ;
un premier couvercle de boîtier (120) installé sur un côté du boîtier (100) et doté en son sein d'un premier palier (1341) ;
un second couvercle de boîtier (1210) installé sur un autre côté du boîtier (100) et doté en son sein d'un second palier (135) ; et
une pale (1220) du type à flux axial installée au niveau d'une partie inférieure du second couvercle de boîtier (1210) pour guider l'écoulement d'air introduit à partir du second couvercle de boîtier (1210),
dans lequel la turbine (136) est configurée comme un type à flux diagonal d'aspiration d'air dans une direction axiale et d'évacuation de l'air dans une direction inclinée vers la direction axiale, et le second couvercle de boîtier (1210) est configuré comme un type à flux axial, de sorte que la turbine et le second couvercle de boîtier (1210) soient agencés le long d'une direction axiale,
**caractérisé en ce que** le boîtier (100) comporte :

une première partie de réception (101) dans laquelle l'ensemble rotor (130) et l'ensemble stator (110) sont reçus ;
une seconde partie de réception (102) disposée au niveau d'un côté de la première partie de réception (101), et dans laquelle la turbine (136) est reçue ;
une partie col (104) disposée entre la première partie de réception (101) et la seconde partie de réception (102) pour présenter un diamètre inférieur à un diamètre de la première partie de réception (101) ;
une partie inclinée (105) inclinée à partir de la première partie de réception (101) en direction de la partie col (104), dans lequel la partie inclinée (105) présente une forme conique avec un diamètre qui diminue progressivement à partir de la première partie de réception (101) en direction de la partie col (104) ; et
un orifice d'admission (106) formé au niveau d'une partie supérieure de la première partie de réception (101) et configuré pour aspirer de l'air dans le boîtier (100).

2. Moteur de ventilateur selon la revendication 1, dans lequel le second couvercle de boîtier (1210) est agencé pour recevoir et supporter le second palier (135), est fixement installé à l'intérieur du boîtier (100), et est situé au niveau d'un côté aval de la turbine (136) par rapport à une direction de flux d'air, et
dans lequel le boîtier (100) et le second couvercle de boîtier (1210) sont agencés de sorte que de l'air, introduit par la turbine (136) entraînée, s'écoule en direction du second couvercle de boîtier (1210) tout en entrant en contact avec l'ensemble stator (110) et l'ensemble rotor (130).

3. Moteur de ventilateur selon la revendication 1 ou 2, dans lequel le second couvercle de boîtier (1210) inclut :

un couvercle externe (1211) ;
un premier moyeu interne (1212) disposé à l'intérieur du couvercle externe (1211) ;
une seconde partie de réception de palier (1214) qui fait saillie à partir d'un côté du premier moyeu interne (1212) en direction de la turbine (136) et est agencé pour recevoir le second palier (135) en son sein ; et

une pluralité de pales de couvercle de boîtier (1213) faisant saillie sous une forme hélicoïdale à partir d'une surface circonférentielle externe du premier moyeu interne (1212) en direction d'une surface circonférentielle interne du couvercle externe (1211), de manière à relier le couvercle externe (1211) au premier moyeu interne (1212).

**4.** Moteur de ventilateur selon la revendication 3, dans lequel la pluralité de pales de couvercle de boîtier (1213) sont radialement étendues et disposées pour être inclinées en direction d'une surface interne du boîtier (100) selon un angle prédéterminé, de manière à guider respectivement un flux d'air déplacé par la turbine (136).

**5.** Moteur de ventilateur selon la revendication 3 ou 4, dans lequel la pale (1220) comporte :

un second moyeu interne (1223) reçu dans le couvercle externe (1211) et disposé en série avec le premier moyeu interne (1212), et

une pluralité d'aubes de pales (1222) faisant saillie sous une forme hélicoïdale à partir d'une surface circonférentielle externe du second moyeu interne en direction de la surface circonférentielle interne du couvercle externe (1211).

**6.** Moteur de ventilateur selon la revendication 5, dans lequel la pluralité d'aubes de pales (1222) sont disposées au niveau de positions respectives correspondant à des positions de la pluralité d'aubes de couvercle de boîtier (1213) disposées au niveau du second couvercle de boîtier (1210).

**7.** Moteur de ventilateur selon l'une quelconque des revendications 1 à 6, dans lequel le premier couvercle de boîtier (120) est accouplé à une extrémité amont du boîtier (100) par rapport à une direction de flux d'air,

dans lequel le premier couvercle de boîtier (120) est disposé au niveau d'un côté amont de la turbine (136) par rapport à la direction de flux de l'air,

dans lequel le premier couvercle de boîtier (120) comprend une première partie de réception de palier (1203) présentant une partie centrale évidée dans laquelle le premier palier (134) est reçu.

**8.** Moteur de ventilateur selon la revendication 7, dans lequel le premier couvercle de boîtier (120) comporte en outre :

une partie de bague externe (1201) disposée au niveau d'un bord de celui-ci et présentant une forme cylindrique à une hauteur constante ; et

une partie de liaison (1204) s'étendant pour relier la première partie de réception de palier (1203) à la partie de bague externe (1201).

**9.** Moteur de ventilateur selon la revendication 8, dans lequel le premier couvercle de boîtier (120) est doté d'une pluralité de trous traversants axiaux (1205) de manière à permettre à l'air d'être aspiré au niveau d'une position adjacente à la première partie de réception de palier (1203), et

dans lequel chacun de la pluralité de trous traversants axiaux (1205) est disposé entre la partie de bague externe (1201) et la partie de liaison (1204).

**10.** Moteur de ventilateur selon l'une quelconque des revendications 1 à 9, dans lequel la turbine (136) comporte :

un moyeu (1361) présentant une forme conique ; et

une pluralité de pales de turbine (1362) faisant saillie le long d'une surface circonférentielle externe du moyeu (1361).

**11.** Moteur de ventilateur selon l'une quelconque des revendications 1 à 10, dans lequel la turbine (136), l'ensemble rotor (130) et l'ensemble stator (110) sont situés entre le premier palier (134) et le second palier (135) le long de la direction axiale, et

dans lequel l'air qui a traversé le premier couvercle de boîtier (120) est évacué vers l'extérieur en passant séquentiellement à travers le premier palier (134), l'ensemble rotor (130) et l'ensemble stator (110), la turbine (136) et le second couvercle de boîtier (1210).

**12.** Moteur de ventilateur selon la revendication 1, dans lequel une inclinaison de la partie inclinée est déterminée par une demi-valeur (D3) de la différence entre un diamètre interne (D1) de la première partie de réception (101) et un diamètre interne (D2) de la partie col (104), et une différence de hauteur (H) entre des extrémités avant et arrière de la partie inclinée.

13. Moteur de ventilateur selon la revendication 12, dans lequel un angle θ de la partie inclinée (105) est déterminé par l'équation 1 ci-dessous.

[Équation 1]

angle de la partie inclinée (θ) = $\tan^{-1}\left(\frac{H}{D3}\right)$, D3= $\left(\frac{(D1-D2)}{2}\right)$,

où D1 désigne un diamètre interne de la première partie de réception, D2 désigne un diamètre interne de la partie col, et H est une différence de hauteur entre les extrémités avant et arrière de la partie inclinée.

14. Moteur de ventilateur selon l'une quelconque des revendications 1 à 13, dans lequel une première bride (103) qui fait saillie radialement vers l'extérieur est disposée au niveau d'une extrémité inférieure du boîtier (100),

dans lequel une seconde bride (1216) qui fait saillie radialement vers l'extérieur est disposée au niveau du second couvercle de boîtier (1210), et
dans lequel la première bride (103) et la seconde bride (1216) sont disposées pour se chevaucher de manière à être en contact étroit l'une avec l'autre.

# FIG. 1

# FIG. 2

# FIG. 3

# FIG. 4

FIG. 5

FIG.  6

# FIG. 7

# FIG. 8

(a)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5806758 B
- US 20200059133 A
- WO 2019220071 A1